(19) **Europäisches Patentamt / European Patent Office / Office européen des brevets**

(11) **EP 2 314 988 A1**

(12) **EUROPEAN PATENT APPLICATION**
published in accordance with Art. 153(4) EPC

(43) Date of publication:
**27.04.2011 Bulletin 2011/17**

(51) Int Cl.:
**G01C 3/06** (2006.01)    **G02B 7/28** (2006.01)
**G03B 13/36** (2006.01)    **H04N 5/232** (2006.01)

(21) Application number: **09805102.2**

(22) Date of filing: **07.08.2009**

(86) International application number:
**PCT/JP2009/064329**

(87) International publication number:
**WO 2010/016625 (11.02.2010 Gazette 2010/06)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **08.08.2008 JP 2008205882**

(71) Applicant: **Canon Kabushiki Kaisha Tokyo 146-8501 (JP)**

(72) Inventor: **OHSAWA, Hiroyuki Tokyo 146-8501 (JP)**

(74) Representative: **TBK-Patent Bavariaring 4-6 80336 München (DE)**

(54) **IMAGE PHOTOGRAPHING DEVICE, DISTANCE COMPUTING METHOD FOR THE DEVICE, AND FOCUSED IMAGE ACQUIRING METHOD**

(57)    An optical restriction using a telecentric optical system, a process amount restriction in which a deteriorated image reconstructing process is executed a plurality of number of times, and the like exist. An apparatus has: an observation image photographing unit 221 for obtaining a plurality of observation images by photographing a same object by a plurality of aperture patterns; a calculating unit 222 for calculating optical transfer characteristics according to a distance to the object; and a distance arithmetic operating unit 206 for calculating the distance to the object from the plurality of observation images and the optical transfer characteristics. The apparatus also has: the observation image photographing unit 221 for obtaining a plurality of observation images by photographing the same object by a plurality of aperture patterns; the calculating unit 222 for calculating the optical transfer characteristics according to the distance to the object; an optical transfer characteristics arithmetic operating unit 206 for calculating optical transfer characteristics which minimize a blur amount from the plurality of observation images and the optical transfer characteristics; and a blur reconstructing unit 207 for obtaining an in-focus image by reconstructing a blur of the image by using the optical transfer characteristics which minimize the blur amount.

*FIG. 1*

EP 2 314 988 A1

**Description**

TECHNICAL FIELD

The present invention relates to an apparatus for photographing a distance image showing distance distribution of an object to be photographed and an in-focus image which are in focus in the whole image region.

BACKGROUND ART

In the related arts, as a method of measuring a distance from a photographing apparatus to an object to be photographed, many methods such as a method of measuring a distance from a blur amount caused by a positional relation between a lens and an image surface and the like have been proposed. An example of the method of measuring the distance from the photographing apparatus to the object will be described hereinbelow.

(1) Method which is used in an automatic focusing camera or the like
(2) Lens focal point method (Depth from focus)
(3) Blur analyzing method (Depth from defocus)
(4) Method using a laser, pattern light, or the like
(5) Ray tracing method by a micro lens array or the like
(6) Method using a patterned aperture or the like According to the method which is used in the automatic focusing camera or the like, a two-eyed lens or the like is used in an optical system and an image is formed onto a device for measuring the distance or the like, thereby measuring the distance.

According to the lens focal point method, a focus is moved at all times and a distance at the time when a video image on an observation display screen becomes sharpest on the display screen is obtained as an estimated distance.

According to the blur analyzing method, a degree of blur in an image is analyzed and an estimated distance is obtained from a relation between a blur amount and a distance.

According to the method using the laser, pattern light, or the like, an estimated distance is obtained by using a method (Time of flight method (TOF method)) whereby a laser beam is irradiated to an actual object and a flying time of the reflected and returned laser beam is measured, thereby measuring the distance or by using a trigonometrical survey method or an illuminance distributing method from an observation image obtained by photographing a laser beam or pattern light projected onto the object.

According to a method disclosed in Reference Document 2 as a ray tracing method by using the micro lens array or the like, an estimated distance is obtained by analyzing angle information of a photographed light beam from an observation image.

According to a method disclosed in Patent Document 1 or Reference Document 1 as a method using a patterned aperture or the like, an observation image is obtained by using the patterned aperture and the observation image is analyzed based on the pattern of the aperture, thereby obtaining a distance image and an in-focus image.

(Patent Document 1) Description of Japanese Patent No. 02963990
(Non-Patent Document 1) Image and Depth from a Conventional Camera with a Coded Aperture/Anat Levin, Rob Fergus, Fr'edo Durand, William T. Freeman/Massachusetts Institute of Technology, Computer Science and Artificial Intelligence Laboratory/SIGGRAPH2007
(Non-patent Document 2) Light Field Photography with a Hand-held Plenoptic Camera/Ren Ng, Marc Levoy, Mathieu, Br'edif Gene, Duval * Mark Horowitz, Pat Hanrahan/Stanford University * Duval Design/SIGGRAPH2005

DISCLOSURE OF THE INVENTION

However, the methods in the related arts have several problems as will be described hereinbelow.

According to a phase difference system which is used in the automatic focusing camera or the like, besides a CMOS for photographing, the device for measuring the distance, the optical system for measuring the distance, and the like are necessary. Since only distances of a few to tens of points on the observation image can be measured, it is difficult to obtain the distance image.

According to the lens focal point method, since the movement of the focus is necessary and a mechanical driving of a focusing lens is accompanied, it takes a time to obtain the distance image.

According to the blur analyzing method, since the relation between the blur that is caused by a telecentric optical system and the formed image is used, a degree of freedom of a lens design is small.

The method using the laser, pattern light, or the like is called an active method and the distance can be measured at high precision. However, since the laser or the pattern light is needed, such a method cannot be used under an environment in which the laser or the pattern light cannot be used.

According to the ray tracing method by using the micro lens array or the like, since the angle information of the photographed light is obtained, a space resolution of the in-focus image deteriorates by an amount corresponding to the obtainment of the angle information.

According to Patent Document 1 as one of methods using the patterned aperture or the like, although the distance image and the in-focus image are obtained, since the telecentric optical system is used and, further, the measurement is executed by the aperture using a pin-hole opening, there is a problem such as a deterioration in light amount.

Although the distance image and the in-focus image are also obtained according to Non-Patent Document 1, a deteriorated image reconstructing process by MAP estimation is executed by the times as many as the number of distance resolution values in a step of executing the image process.

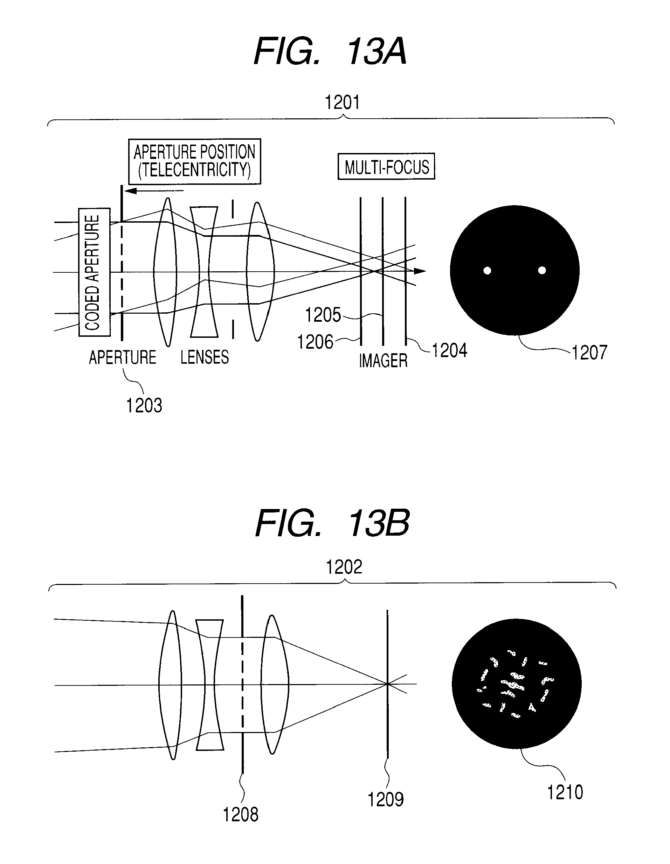

An optical system of an image photographing apparatus in the related art is illustrated in FIGS. 13A and 13B.

In FIG. 13A, an optical system 1201 of Patent Document 1 is illustrated. In order to keep a relation between a blur amount and a size of formed image, an opening mask 1207 having two pin-holes at a position 1203 is used as an aperture. Therefore, there is such a problem that since a substantial F value is large, a light amount is small and an exposing time becomes long. CMOS sensors are arranged at positions 1204, 1205, and 1206, thereby obtaining a plurality of observation images of different focuses. In order to realize the above method, it is necessary to move the focus by a mechanical unit or to use an optical unit such as a spectral and there is a problem such as restriction of the mechanical operation (focus moving time) or restriction of the optical unit (size of the optical unit).

In FIG. 13B, an optical system 1202 of Reference Document 1 as one of the method using a patterned aperture or the like is illustrated. A patterned aperture coded opening mask 1210 is arranged at a position of an aperture 1208 of an optical system of an ordinary digital camera and an observation image is photographed by a CMOS sensor 1209. The distance measuring method of Non-Patent Document 1 is a method whereby from the observation image obtained by the opening mask 1210, an image including no blur is arithmetically operated by the deteriorated image reconstructing process by using a PSF (point spread function) according to a previously-measured distance to a photographing object, and the distance to the object of the PSF at which the optimum image including no blur can be formed is assumed to be an estimated distance.

The deteriorated image reconstructing process disclosed in the above method is executed by the following equation (3).

$$ x = \arg\min \| h \otimes x - y \|^2 + \lambda \sum_i \rho(\nabla x_i) \qquad \cdots (3) $$

In the equation (3), y denotes an observation image; h optical transfer characteristics; x an estimated reconstruction image including no blur; $\lambda$ a parameter for adjusting a $\rho$ term; $\rho(\nabla x_i)$ a Laplacian filter; and $\otimes$ a convolution operator.

According to the deteriorated image reconstructing process shown by the equation (3), a repetitive arithmetic operation including a convolution arithmetic operation is necessary and a long processing time is needed. It is difficult to reconstruct the deteriorated image in the case where a gain of the optical transfer characteristics h is equal to zero or a value near zero.

It is, therefore, an object of the invention to provide an image photographing apparatus for obtaining a high-precision distance image and an in-focus image of an object by a stable process of a small load that does not excessively use a convolution arithmetic operation without causing such an inconvenience as mentioned above.

According to the invention, there is provided a first image photographing apparatus comprising: an observation image photographing unit that obtains a plurality of observation images by photographing a same object by a plurality of aperture patterns; a unit that calculates optical transfer characteristics according to a distance to the object; and a distance arithmetic operating unit that calculates the distance to the object from the plurality of observation images and the optical transfer characteristics.

According to the invention, there is provided a second image photographing apparatus comprising: an observation image photographing unit that obtains a plurality of observation images by photographing a same object by a plurality of aperture patterns; a unit that calculates optical transfer characteristics according to a distance to the object; an optical transfer characteristics arithmetic operating unit that calculates optical transfer characteristics from the plurality of observation images and the optical transfer characteristics so as to minimize a blur amount; and a blur reconstructing unit that obtains an in-focus image by reconstructing a blur of an image by using the optical transfer characteristics which minimize the blur amount.

According to the invention, there is provided a distance arithmetic operating method of an image photographing apparatus, comprising: obtaining a plurality of observation images by photographing a same object by a plurality of aperture patterns; calculating optical transfer characteristics according to a distance to the object; and calculating the distance to the object from the plurality of observation images and the optical transfer characteristics.

According to the invention, there is provided an in-focus image obtaining method of an image photographing apparatus comprising: obtaining a plurality of observation images by photographing a same object by a plurality of aperture patterns; calculating optical transfer characteristics according to a distance to the object; calculating optical transfer characteristics from the plurality of observation images and the optical transfer characteristics so as to minimize a blur amount; and obtaining an in-focus image by reconstructing a blur of an image by using the optical transfer characteristics which minimize the blur amount.

According to the invention, the distance to the object at each point on the observation image can be measured. Thus, the distance image and the in-focus image can be photographed.

Further features of the present invention will become apparent from the following description of exemplary embodiments with reference to the attached drawings.

BRIEF DESCRIPTION OF THE DRAWINGS

FIG. 1 is a block diagram of an apparatus construction of an embodiment of an image photographing apparatus of the invention.

FIG. 2 is a block diagram of an apparatus construction of another construction example of the image photographing apparatus of the invention.

FIG. 3 is a diagram illustrating an optical system of an image photographing apparatus using a variable pupil filter.

FIGS. 4A, 4B, 4C, and 4D are diagrams illustrating observation images, an in-focus image, and a distance image.

FIG. 5 is a diagram illustrating an outside appearance of the image photographing apparatus of the embodiment.

FIG. 6 is a diagram illustrating an optical system using a patterned pupil filter.

FIG. 7 is a diagram illustrating another optical system using a patterned pupil filter.

FIG. 8 is a diagram illustrating an optical transfer characteristics - estimated distance table.

FIG. 9 is a flowchart illustrating the operation of a distance arithmetic operating unit.

FIG. 10 is a flowchart illustrating the operation of an optical transfer characteristics calculating unit.

FIG. 11 is a diagram illustrating a relation between an estimated distance and an error evaluation value.

FIG. 12 is a flowchart illustrating the operation of a blur reconstructing unit.

FIGS. 13A and 13B are diagrams illustrating constructions of optical systems of image photographing apparatuses in the related art.

Description of Reference Numerals

101.. Optical system
102.. Aperture
103.. Opening mask
104.. Opening mask
105.. Optical lens
106.. CMOS sensor
206.. Distance arithmetic operating unit/optimum optical characteristics arithmetic operating unit
207.. Blur reconstructing unit
208.. Re-focus image arithmetic operating unit
221.. Observation image photographing unit
222.. Optical transfer characteristics calculating unit

BEST MODE FOR CARRYING OUT THE INVENTION

An image photographing apparatus and its method of the first embodiment according to the invention will be described in detail with reference to the drawings. A construction of the apparatus of the embodiment, which will be described hereinbelow, is a combination of a first image photographing apparatus and a second image photographing apparatus according to the invention.

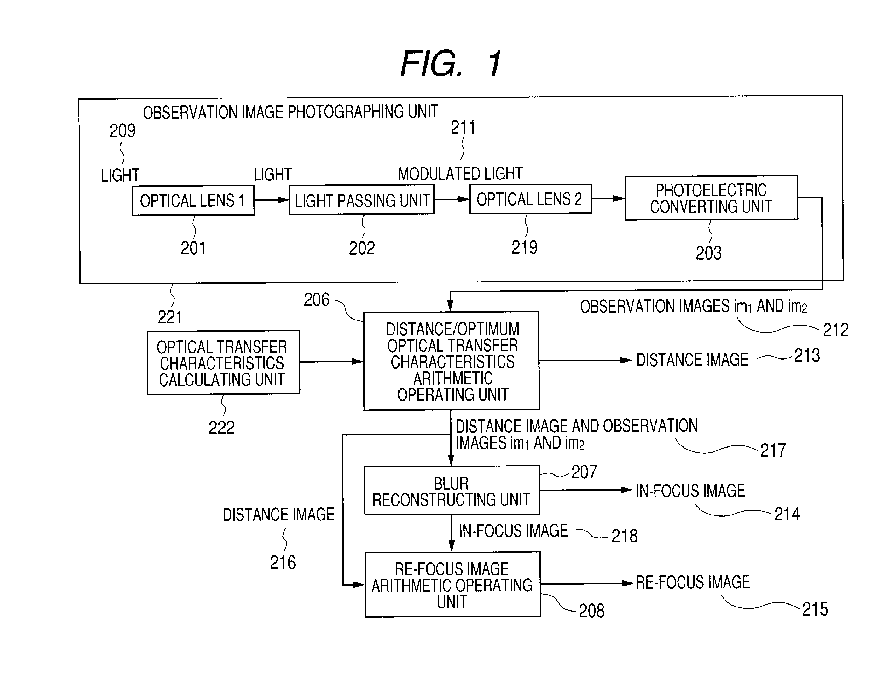

FIG. 1 is a block diagram of the apparatus construction of the embodiment of the image photographing apparatus of the invention.

The image photographing apparatus of the embodiment is constructed by: an observation image photographing unit 221 for photographing a plurality of observation images; an optical transfer characteristics calculating unit 222; a distance arithmetic operating unit/optimum optical characteristics arithmetic operating unit 206; a blur reconstructing unit 207; and a re-focus image arithmetic operating unit 208. The observation image photographing unit 221 is an observation image photographing unit.

The observation image photographing unit 221 is constructed by: an optical lens (optical lens 1) 201; a light passing unit 202; an optical lens (optical lens 2) 219; and a photoelectric converting unit 203.

The optical lens 201 has a function for converging light 209 by using lenses almost similar to lenses which are used in a film camera or a digital camera in the related art.

The light converged by the optical lens 201 is modulated by using the light passing unit 202.

Although the light passing unit 202 modulates the light by using an aperture in the embodiment as will be described hereinafter, the modulation may be performed by using an aspherical lens, a curvature variable lens, or the like. In this instance, the observation image of the same object is time-divisionally photographed and the optical characteristics of the light passing unit 202 is changed with the elapse of time, thereby obtaining a plurality of observation images. In order to time-divisionally photograph a plurality of observation images, a shake preventing unit or the like for preventing a camera shake from occurring may be added or a high shutter speed may be selected so as not to cause an object shake.

Light 211 modulated by the light passing unit 202 is further converged and is image-formed by the optical lens 219.

The image-formed light is converted into an electric signal by the photoelectric converting unit 203 and photographed as observation images $im_1$ and $im_2$ 212.

The observation images are transferred as arguments of the distance arithmetic operating unit 206, blur reconstructing unit 207, and re-focus image arithmetic operating unit 208 serving as software processes.

The photoelectric converting unit 203 converts an image forming state of the light into an electric signal by using a CCD sensor, a CMOS sensor, or the like.

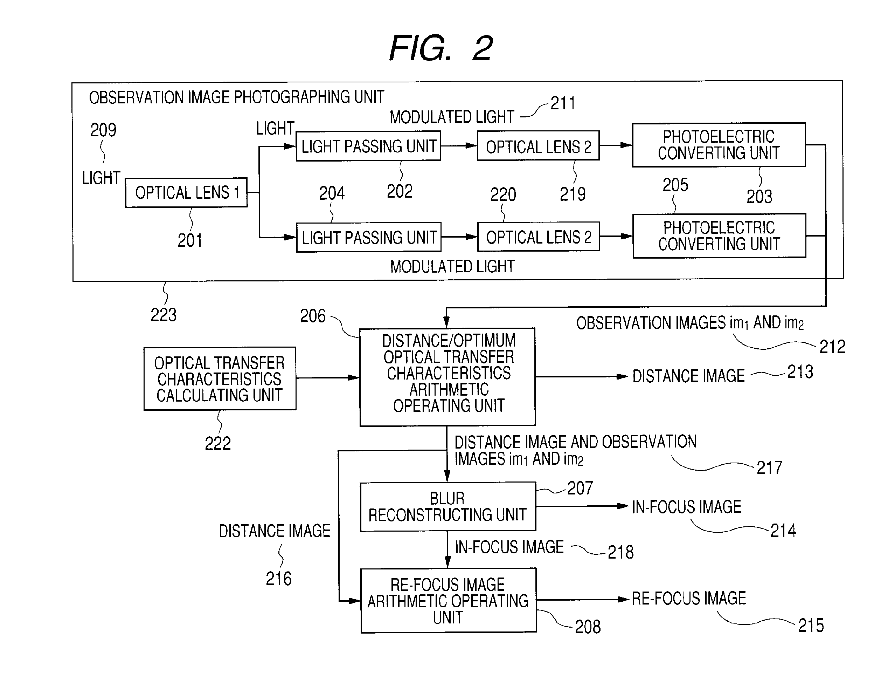

In FIG. 1, a set of the light passing unit, optical lens 2, and the photoelectric converting unit is provided, the observation image of the same object is time-divisionally photographed, and the optical characteristics of the light passing unit is changed with the elapse of time, thereby obtaining a plurality of observation images. However, as illustrated in FIG. 2, two sets constructed by one set including the light passing unit 202, the optical lens (optical lens 2) 219, and the photoelectric converting unit 203 and one set including a light passing unit 204, an optical lens (optical lens 2) 220, and a photoelectric converting unit 205 may be provided as an observation image photographing unit 223. The observation image photographing unit 223 is an observation image photographing unit. The optical characteristics of the light passing unit 202 and those of the light passing unit 204 differ. Three or more sets may be provided. By simultaneously providing two or more sets as mentioned above, a plurality of observation images can be simultaneously photographed. It is also possible to construct in such a manner that the observation image of the same object is time-divisionally photographed and, after the observation image was obtained by one of the sets, another observation image is obtained by another set. In the case of time-divisionally photographing a plurality of observation images as mentioned above, the shake preventing unit or the like for preventing a camera shake from occurring may be added or the high shutter speed may be selected so as not to cause the object shake.

The optical transfer characteristics calculating unit 222 is a unit for calculating optical transfer characteristics (first optical transfer characteristics) according to a distance to the object.

The optical transfer characteristics may be calculated by using a numerical expression or discrete values may be held as a table.

Although the method of interpolating the discrete values has been used in the embodiment, another similar method may be used.

The distance arithmetic operating unit 206 calculates a distance image 213 by using the observation images $im_1$ and $im_2$.

The distance arithmetic operating unit 206 also has an optimum optical characteristics arithmetic operating unit. The optimum optical characteristics arithmetic operating unit is an optical transfer characteristics arithmetic operating unit for calculating second optical transfer characteristics so as to minimize a blur amount. It is a unit for further precisely arithmetically operating an estimated distance to the object that is discretely calculated.

The blur reconstructing unit 207 receives data of the distance image and the observation images $im_1$ and $im_2$ from the distance arithmetic operating unit 206 and arithmetically operates those data, thereby calculating an in-focus image 214 and obtaining the in-focus image.

The re-focus image arithmetic operating unit 208 receives data of an in-focus image 218 and a distance image 216 and purposely adds a blur to a region where the user wants to blur, thereby calculating a re-focus image 215.

The re-focus image arithmetic operating unit 208 sets camera parameters (focus distance, F number, and the like) upon formation of a re-focus image 215 and can form an image corresponding to various kinds of lenses and a depth of field.

In the embodiment, re-focus images such as image at an arbitrary focus position, image of an arbitrary depth of field, and further, image in which an aberration has been reconstructed can be formed from the distance image and the in-focus image.

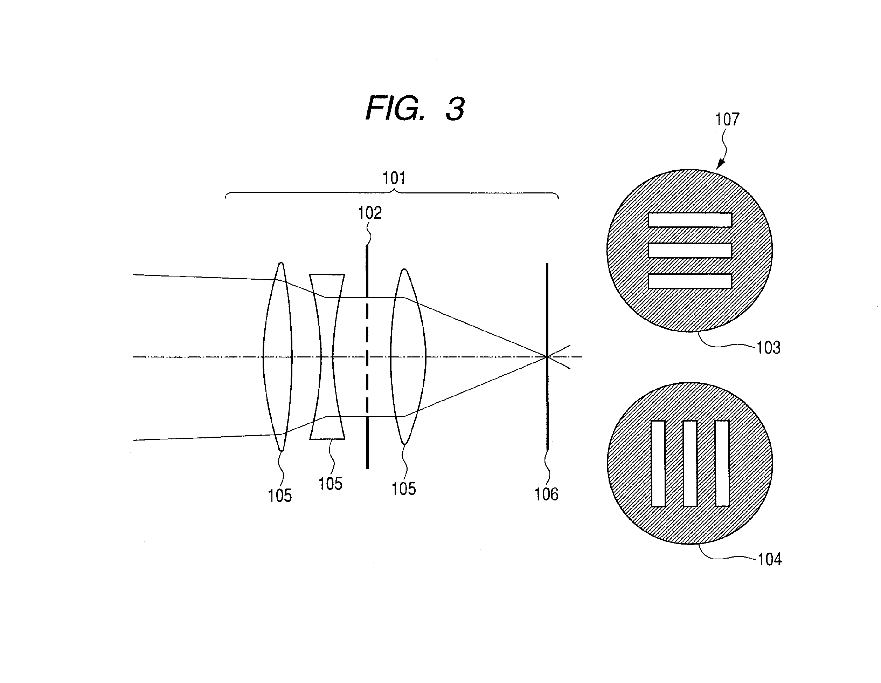

FIG. 3 is a diagram illustrating an observation image photographing unit of the image photographing apparatus in FIG. 1 and is a diagram illustrating the observation image photographing unit (optical system) using a variable pupil filter. According to a construction illustrated in FIG. 3, one set of the light passing unit, the optical lens 2, and the photoelectric converting unit is provided, the observation image of the same object is time-divisionally photographed, and the optical characteristics of the light passing unit are changed with the elapse of time.

An optical system 101 as an observation image photographing unit is constructed in such a manner that an aperture 102 to which opening masks 103 and 104 serving as a light passing unit have been applied is provided with: optical lenses 105 each for converging the incident light; and a CMOS sensor 106, serving as a photoelectric converting unit, for converting an image forming state of the light into an electric signal. The optical lenses 105 correspond to the optical lenses 201 and 219 in FIG. 1.

The aperture 102 is an aperture which can electrically change a pattern of the opening mask and can change it to a pattern of the opening mask 103 and a pattern of the opening mask 104.

Besides the method of electrically switching the opening patterns, the aperture 102 may use another method such as a method of mechanically switching or a method of switching in a manner of physical properties.

The image photographing apparatus photographs the image in a state where the aperture 102 has been changed to the opening mask 103 and the opening mask 104, thereby obtaining a plurality of observation images of different aperture shapes.

The distance arithmetic operating unit, the blur reconstructing unit, and the re-focus image arithmetic operating unit calculate the distance image, in-focus image, and re-focus image from a plurality of observation images of the different patterns of the opening masks.

Each of the opening masks 103 and 104 has a patterned coded opening shape (pupil system shape). Specifically speaking, the opening mask 103 has a pattern like an opening 107 and the opening mask 104 has a pattern like an opening 108.

The patterns which are used for the openings 107 and 108 largely exert an influence on the stability of the distance arithmetic operation. For example, if both of the opening patterns of the openings 107 and 108 are circular openings, two blur images are photographed as substantially the same images, so that it is difficult to analyze them. It is, therefore, desirable that blur characteristics of the observation images which are photographed by the two opening patterns are different. Specifically speaking, opening patterns adapted to cause the blurs in which space frequency characteristics of the images which are photographed are different are used.

Although an example of a case where there are two opening patterns is illustrated in the embodiment, it is also possible to construct in such a manner that two or more opening patterns are used, the object is photographed two or more times, and two or more observation images are obtained.

In this case, since a plurality of observation images are obtained, two of them are selected and the distance image, in-focus image, and re-focus image can be obtained by a method similar to the embodiment.

Further, in all combinations of the selection of two observation images, by similarly executing arithmetic operations of a distance image and an in-focus image and averaging results of the arithmetic operations, arithmetic operating precision can be raised.

In the observation images which are obtained by changing the aperture 102 to either the pattern of the opening mask 103 or the pattern of the opening mask 104, although the space frequency characteristics differ, angles of view are the same.

According to the selection of the opening patterns, by satisfying the following conditions, the arithmetic operating precision of the distance arithmetic operating unit and the blur reconstructing unit can be raised.

(1) A gain of a high frequency band does not drop irrespective of a blur size.
(2) Zero points of the gain do not overlap at the same frequency in frequency characteristics of a plurality of opening patterns.
(3) A light amount necessary for exposure is obtained by increasing an opening area as much as possible.
(4) Pattern whose blur characteristics can be easily analyzed.
(5) Is not influenced by diffraction.

Although there are a plurality of aperture patterns which can satisfy the above conditions, the patterns of the opening masks as illustrated in FIG. 3 are selected in the embodiment.

Subsequently, image data related to the embodiment will be described.

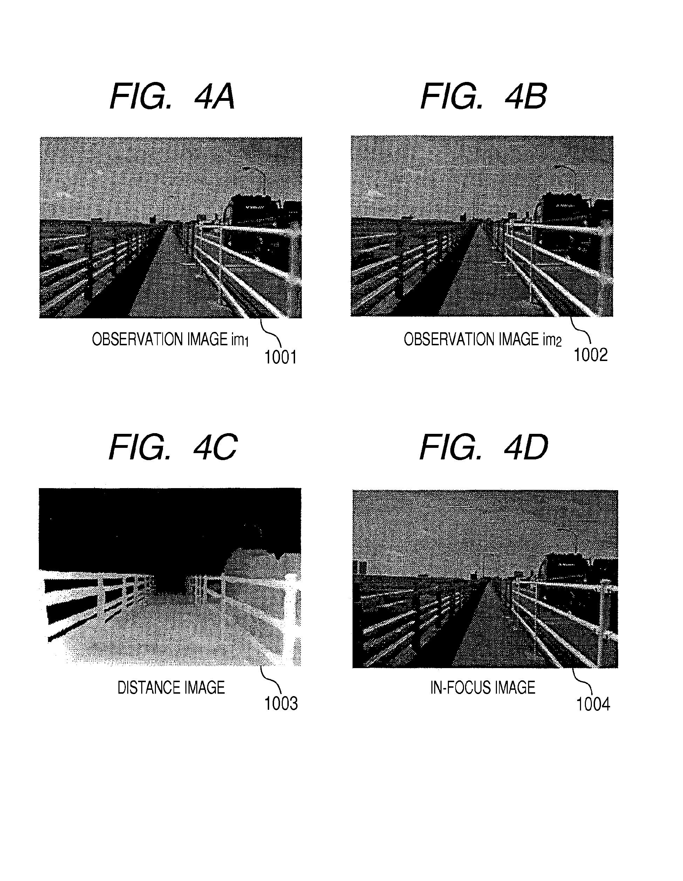

FIGS. 4A, 4B, 4C, and 4D illustrate observation images, an in-focus image, and a distance image, respectively.

Observation images $im_1$ (1001) and $im_2$ (1002) are illustrated in FIGS. 4A and 4B. Although they are the observation images photographed by using the opening masks of the different patterns and relate to photographs of the same angle of view, their blur characteristics are different.

A distance image 1003 is illustrated in FIG. 4C. The distance image is 2-dimensional array data on the same plane as that of the observation image in which the distance to the object is used as a value. A luminance value of the same angle of view as that of the observation image and of every pixel indicates the distance.

Although dots on the distance image corresponding to dots on the observation image show characteristics at the same position of the object in the embodiment, if a positional relation between the observation image and the distance image can be recognized, a space resolution of the observation image and a space resolution of the distance image may differ.

In the distance image 1003 in FIG. 4C, the higher the luminance is, the smaller the distance is, and the lower the luminance is, the larger the distance is.

An in-focus image 1004 is illustrated in FIG. 4D. The in-focus image is an image which does not include the blur characteristics although it has the same angle of view as that of the observation images $im_1$ and $im_2$. That is, the in-focus image is an image which does not include the blur state on the image and corresponds to an image whose depth of field is infinite.

In the embodiment, further, a re-focus image in which parameters regarding the focus have been changed is formed from the distance image and the observation image and, after the photographing, an image having an arbitrary blur state is formed.

Subsequently, an outside appearance of the image photographing apparatus of the embodiment is illustrated.

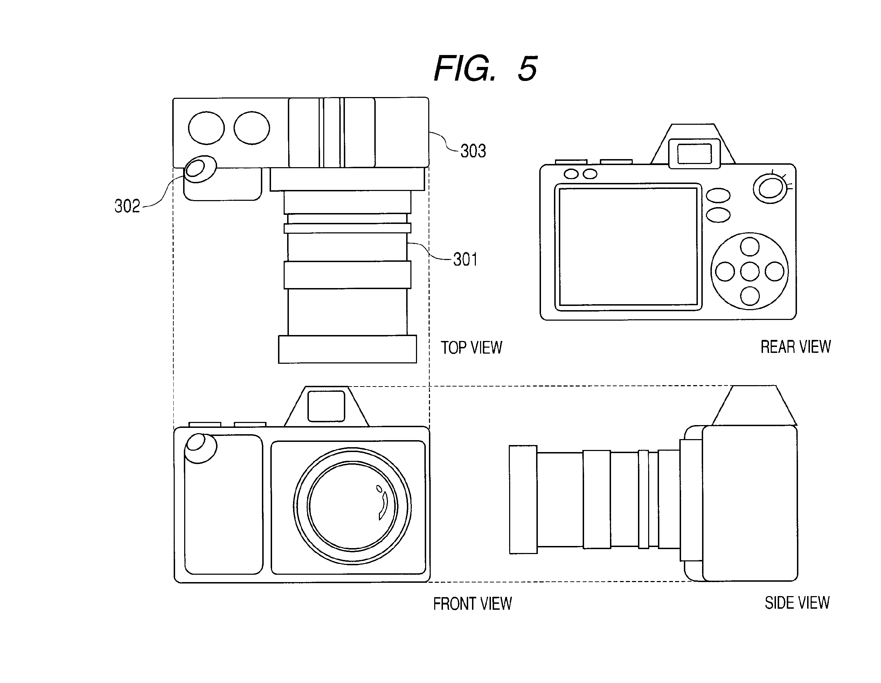

FIG. 5 is a diagram illustrating the outside appearance of the image photographing apparatus of the embodiment.

The outside appearance of the image photographing apparatus is almost similar to that of the ordinary digital camera.

The optical system 101 described in FIG. 3 corresponds to an optical system 301 in FIG. 5.

Since the whole optical system 101 is incorporated in the optical system 301, in the case where the optical system illustrated in FIG. 3 is used as one set and the photographing is time-divisionally executed, as a hardware portion of a main body portion 303, the digital camera in the related art can be also used in common merely by changing the aperture pattern.

By setting a shape of one of the opening patterns of the aperture 102 into a circular opening or a polygonal opening, an observation image similar to that in the digital camera in the related art can be also photographed.

As for the operation of the user in the case of photographing the distance image and the in-focus image, it is sufficient to merely execute the operation of one time of the shutter button in a manner similar to the digital camera in the related art.

After the one operation of the shutter button was detected, the image photographing apparatus changes the aperture pattern by the number of times as many as the number of observation images necessary for the process and photographs a plurality of observation images, thereby forming the distance image and the in-focus image.

Subsequently, an optical system serving as an observation image photographing unit which is used in the image photographing apparatus in FIG. 2 is illustrated.

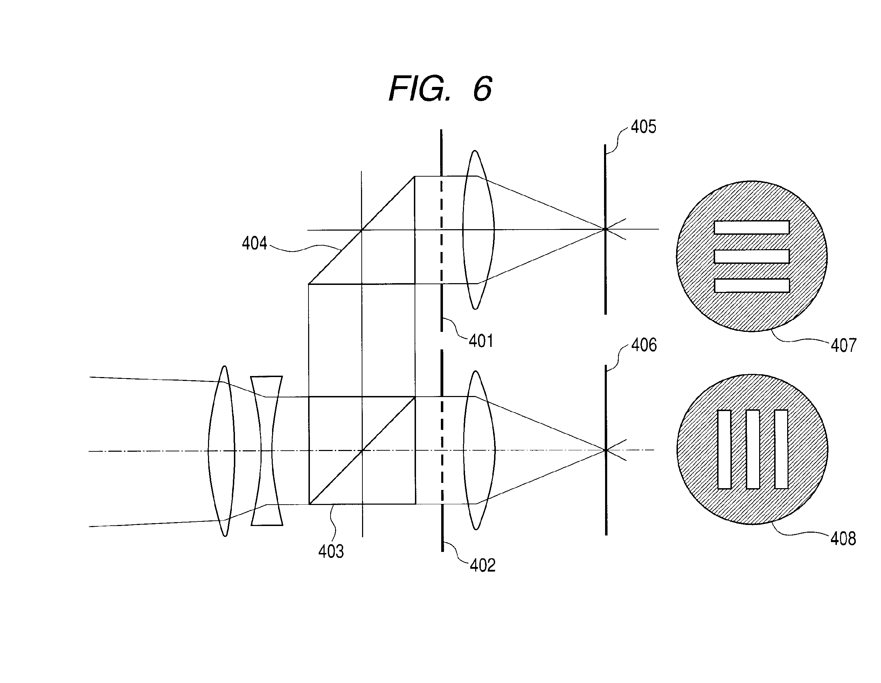

FIG. 6 illustrates an optical system using a patterned pupil filter and shows the optical system different from that of FIG. 3.

In the construction of the optical system in FIG. 3, since the optical system 101 of only one set is used, a plurality of observation images are obtained by time-divisionally photographing a plurality of number of times. Therefore, there is such a drawback that it is weak against the camera shake and the object shake.

FIG. 6 illustrates a construction of the optical system in which the occurrence of the camera shake and the object shake is further suppressed. According to such a construction example, two sets each including the light passing unit, the optical lens 2, and the photoelectric converting unit are provided as illustrated in FIG. 2.

A large difference between the optical system of FIG. 3 and the optical system of FIG. 6 relates to a point that a light source is divided into halves by an optical splitter. That is, a light beam is divided by the optical splitter.

The light which has entered through the optical lens is divided into halves by an optical splitter 403.

A half one of the divided two light beams is formed as an image through an aperture 402 and an input of the observation image $im_1$ is obtained by a CMOS sensor 406. At this time, a patterned aperture like an opening pattern 408 is used as an aperture 402.

As for the residual half of the divided two light beams, its optical path is changed by using a reflecting mirror 404, the light is formed as an image through an aperture 401, and an input of the observation image $im_2$ is obtained by a CMOS sensor 405. At this time, a patterned aperture like an opening pattern 407 is used as an aperture 401.

Since the photographing of the observation image $im_1$ by the CMOS sensor 406 and the photographing of the observation image $im_2$ by the CMOS sensor 405 are simultaneously executed, a tolerance to the camera shake and the object shake is larger than that in the image photographing apparatus using the optical system in FIG. 2.

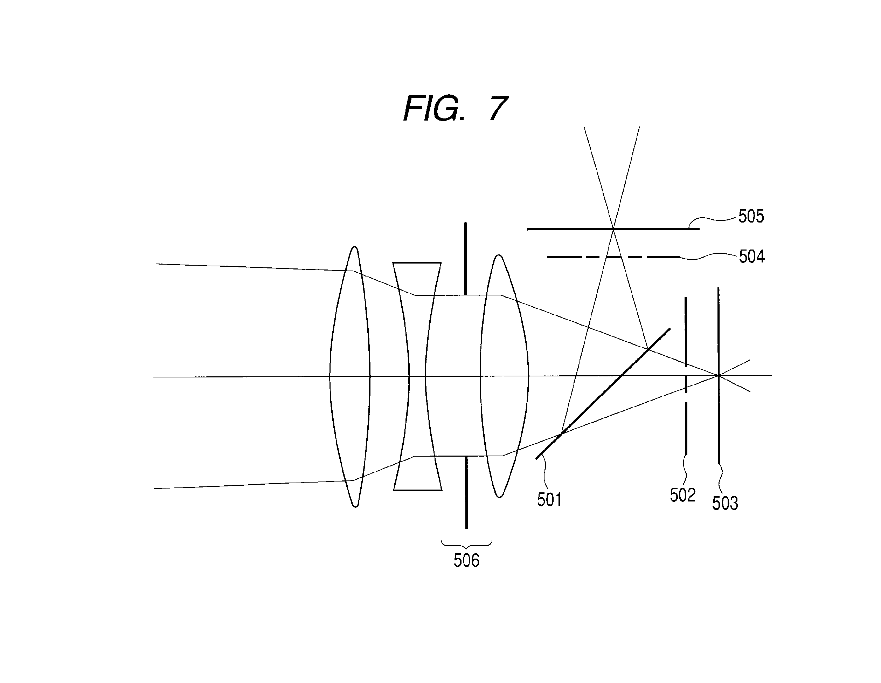

FIG. 7 illustrates a construction example in which the optical system in FIG. 6 is further changed.

In the optical system illustrated in FIG. 6, although a plurality of observation images can be simultaneously photographed, the whole size of the photographing apparatus increases.

To improve such a drawback, in FIG. 7, the light is not divided at an aperture position 506 but an optical splitter 501 is arranged at a light-converged position.

The light which has entered through the optical lens is divided into halves by the optical splitter 501.

A half one of the divided two light beams is formed as an image through a patterned aperture 502 and is input as an observation image $im_1$ by a CMOS sensor 503.

The residual half of the divided two light beams is formed as an image through a patterned aperture 504 and is input as an observation image $im_2$ by a CMOS sensor 504.

FIG. 7 differs from FIG. 6 with respect to a point that it is required to perform scaling by the patterns 504 and 502 of the opening masks so that a size of aperture pattern is made constant according to the focusing state.

However, the size of the whole image photographing apparatus can be designed so as to be smaller than that of the image photographing apparatus using the optical system of FIG. 6.

Although the optical systems of the image photographing apparatuses have been illustrated in FIGS. 3, 6, and 7, the distance arithmetic operating unit 206, the blur reconstructing unit 207, and the re-focus image arithmetic operating unit 208 can be executed in common in all of the image photographing apparatuses in FIGs. 3, 6, and 7.

Since each optical system has advantages, the optimum optical system can be selected according to an application.

Subsequently, an algorithm for calculating the distance in the embodiment is shown.

An example in the case where the two opening masks illustrated in FIG. 6 are used and two observation images are photographed is illustrated. Naturally, the optical system of FIG. 7 or 3 may be used.

When the observation image (which becomes the first observation image) photographed by the opening mask of the aperture 402 is assumed to be $im_1$, the observation image (which becomes the second observation image) photographed by the opening mask of the aperture 401 is assumed to be $im_2$, a PSF (Point Spread Function) by the opening mask of the aperture 402 is assumed to be $h_a$, a PSF by the opening mask of the aperture 401 is assumed to be $h_b$, and an in-focus image is assumed to be s, the following equations (4) are satisfied.

$$\begin{cases} im_1 = h_a \otimes s \\ im_2 = h_b \otimes s \end{cases} \qquad \cdots(4)$$

where, $\otimes$ denotes a convolution arithmetic operation symbol.

By Fourier transforming the equations (4), the following equations (5) are obtained.

In the equations, $IM_1$, $IM_2$, $H_a$, $H_b$, and S denote frequency characteristics of $im_1$, $im_2$, $h_a$, $h_b$, and s, respectively.

$$\begin{cases} IM_1 = H_a \cdot S \\ IM_2 = H_b \cdot S \end{cases} \qquad \cdots(5)$$

Since the in-focus image S in the equations (5) is a common term, the following equation (6) can be derived by unifying the equations (5).

$$IM_1 \cdot H_b - IM_2 \cdot H_a = 0 \qquad \cdots(6)$$

From the equation (6), it will be understood that a result obtained by executing a convolution arithmetic operation by the PSF of the opening mask of the aperture 401 to the observation image $im_1$ photographed by the opening mask of the aperture 402 and a result obtained by executing a convolution arithmetic operation by the PSF of the opening mask of the aperture 402 to the observation image $im_2$ photographed by the opening mask of the aperture 401 are the same.

However, actually, since the left side of the equation (6) is not perfectly equal to 0 due to an error or the image forming state, the distance is obtained by the following equation (7).

$$z' = \arg\min_{z} \left\| \mathrm{IM}_1 \cdot \mathrm{H}_b - \mathrm{IM}_2 \cdot \mathrm{H}_a \right\|_2 \qquad \cdots (7)$$

where, z' denotes an estimated distance.

A state which satisfies the equation (7) will now be examined.

Since $\mathrm{IM}_1$ and $\mathrm{IM}_2$ are equal to $\mathrm{H}_a \cdot \mathrm{S}$ and $\mathrm{H}_b \cdot \mathrm{S}$ from the equations (5), if the proper $\mathrm{H}_a$ and $\mathrm{H}_b$ can be substituted into the equation (7), a value obtained by the following expression (8) becomes minimum.

$$\left\| \mathrm{IM}_1 \cdot \mathrm{H}_b - \mathrm{IM}_2 \cdot \mathrm{H}_a \right\|_2 \qquad \cdots (8)$$

The optical transfer characteristics $\mathrm{H}_a$ and $\mathrm{H}_b$ depend on the distance to the object. A set of $\mathrm{H}_a$ and $\mathrm{H}_b$ at a certain distance is uniquely determined for the distance.

Therefore, relations between a distance z to the object and the optical transfer characteristics $\mathrm{H}_a$ and $\mathrm{H}_b$ are preliminarily held as an optical transfer characteristics table and by substituting $\mathrm{H}_a$ and $\mathrm{H}_b$ into the equation (7), the estimated distance z' can be obtained. At this time, either design values or actually measured values may be used as $\mathrm{H}_a$ and $\mathrm{H}_b$.

That is, since $\mathrm{H}_a$ and $\mathrm{H}_b$ depend on the distance to the object, the equation (7) can be expressed by the following equation (9).

$$z' = \arg\min_{z} \left\| \mathrm{IM}_1 \cdot \mathrm{H}_b \big|_z - \mathrm{IM}_2 \cdot \mathrm{H}_a \big|_z \right\|_2 \qquad \cdots (9)$$

The table of $\mathrm{H}_a$ and $\mathrm{H}_b$ can be expressed by the following expressions (10).

$$\begin{cases} \mathrm{H}_a \big|_{z=z_1} \\ \mathrm{H}_b \big|_{z=z_1} \end{cases} , \quad \begin{cases} \mathrm{H}_a \big|_{z=z_2} \\ \mathrm{H}_b \big|_{z=z_2} \end{cases} , \quad \cdots \qquad \cdots (10)$$

By obtaining z at which a value of the following expression (11) becomes minimum by using the table shown by the expressions (10), the estimated distance z' which satisfies the equation (9) is derived.

$$\left\| \mathrm{IM}_1 \cdot \mathrm{H}_b \big|_z - \mathrm{IM}_2 \cdot \mathrm{H}_a \big|_z \right\|_2 \qquad \cdots (11)$$

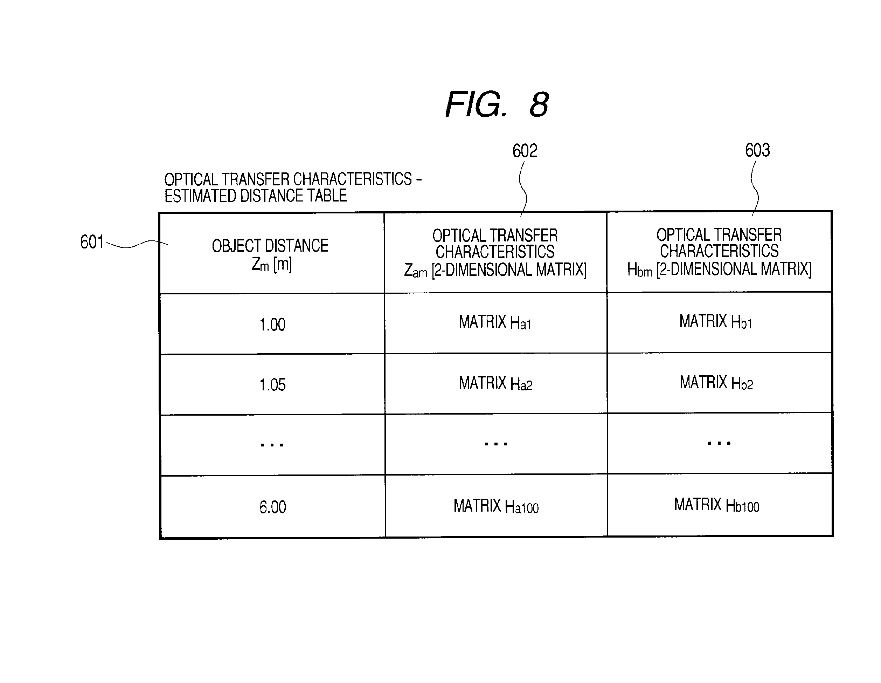

The table shown by the expressions (10) is similar to an optical transfer characteristics - estimated distance table (which becomes the optical transfer characteristics table) illustrated in FIG. 8, which will be described hereinafter. That is, the expressions (10) show the optical transfer characteristics table.

In the case where the photographing apparatus is a shift-variant optical system, the expressions (10) show the optical transfer characteristics table indicating the optical transfer characteristics at each position on the photographing surface that is image-formed onto a photosensing surface of an image pickup device. Such a table is prepared for the position on the image pickup surface.

In the case where the photographing apparatus is a shift-invariant optical system, the same optical transfer characteristics are obtained at every position on the photographing surface of the image pickup device. Therefore, it is sufficient that the expressions (10) prepare one optical transfer characteristics table irrespective of the position on the photographing surface.

Although the optical transfer characteristics table shows the optical transfer characteristics of the discrete values corresponding to the distance, the expressions (10) may be realized by holding the optical transfer characteristics as a functional equation (optical transfer characteristics function) for the distance from design information of the lens.

For example, in the embodiment, a permission blur circle size pcs is calculated from the distance z by the following equation (12) and the optical transfer characteristics are approximately calculated as expressions (10) by using the permission blur circle size pcs.

$$
pcs = \begin{cases} \dfrac{d \cdot \left( \dfrac{1}{|Zp|} - \dfrac{1}{|Zf|} \right)}{\dfrac{1}{f} + \dfrac{1}{|Zf|}} & \cdots \quad \text{when} \quad Zf - Zp <= 0 \\[2em] \dfrac{d \cdot \left( \dfrac{1}{|Zf|} - \dfrac{1}{|Zp|} \right)}{\dfrac{1}{f} + \dfrac{1}{|Zf|}} & \cdots \quad \text{when} \quad Zf - Zp > 0 \end{cases} \qquad \cdots (12)
$$

where, Zf denotes an object distance; Zp a focus distance; f a focal distance; and d a lens diameter.

Subsequently, a data table which is used in the embodiment will be mentioned.

FIG. 8 illustrates the optical transfer characteristics - estimated distance table.

The optical transfer characteristics - estimated distance table of FIG. 8 shows the optical transfer characteristics obtained by frequency-converting the PSF (Point Spread Function) at the distance z to the object.

The optical transfer characteristics - estimated distance table is a data table which is used by an optical transfer characteristics calculating unit, which will be described hereinafter.

Although design values may be used as optical transfer characteristics, the actually measured values are used in the embodiment.

By using the actually measured optical transfer characteristics, a calibration can be performed to an influence of noises or an influence of an optical aberration or the like.

An object distance 601 is a distance to the object.

Optical transfer characteristics 602 and 603, which will be described hereinbelow, show optical transfer characteristics in the case where the object exists at a position away from the apparatus by z.

The optical transfer characteristics 602 are the optical transfer characteristics $H_a$ corresponding to the distance z to the object. The optical transfer characteristics $H_a$ are the optical transfer characteristics corresponding to the opening mask 103.

Similarly, the optical transfer characteristics 603 are the optical transfer characteristics $H_b$ corresponding to the distance z to the object. The optical transfer characteristics $H_b$ are the optical transfer characteristics corresponding to the opening mask 104.

Since the optical transfer characteristics change depending on a distance from an optical axis or the direction from the optical axis, the optical transfer characteristics may be held according to the position of the lens. Since the optical transfer characteristics also change depending on the focusing position, the necessary tables are held.

Although the two optical transfer characteristics $H_a$ and $H_b$ are held in the embodiment, if there are two or more opening masks, it is sufficient to increase the number of optical transfer characteristics according to the number of opening masks.

As mentioned above, the optical transfer characteristics of the opening masks according to the distance are held.

Subsequently, a flowchart for calculating the distance image in the embodiment is shown.

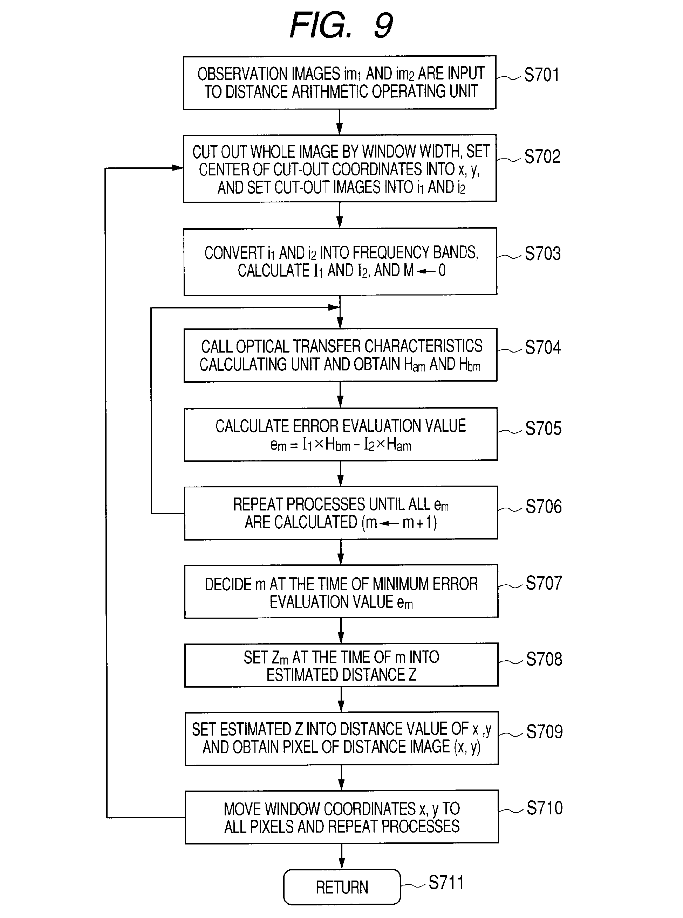

FIG. 9 illustrates a flowchart showing the operation of a distance arithmetic operating unit.

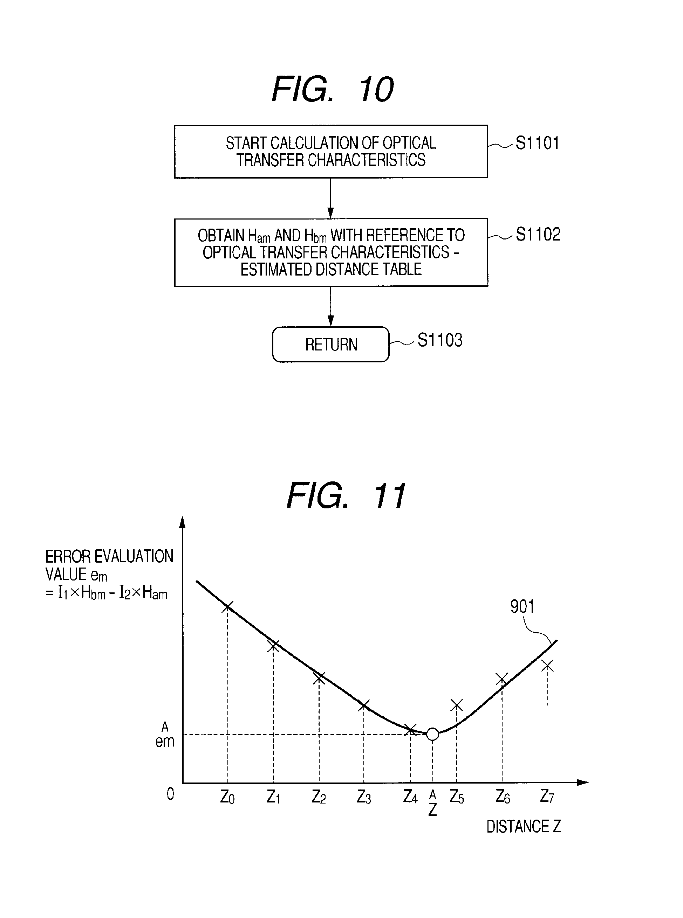

FIG. 10 illustrates a flowchart showing the operation of an optical transfer characteristics calculating unit.

In step S701, the observation images $im_1$ and $im_2$ are input to the distance arithmetic operating unit.

In step S702, from the observation images $im_1$ and $im_2$, the distance arithmetic operating unit cuts out images of a window size (wx, wy) smaller than the observation images at a position (x, y) on an observation display screen and sets the cut-out images into observation images $i_1$ and $i_2$.

The estimated distance z is measured every small window.

In the calculation of the estimated distance z, if the maximum size of the PSF on the CMOS sensor 106 is equal to or larger than the window size (wx, wy), the distance to the object cannot be correctly discriminated. Therefore, it is necessary to decide wx and wy in consideration of those events.

Subsequently, in step S703, the observation images $i_1$ and $i_2$ are Fourier transformed, thereby calculating $I_1$ and $I_2$. "0" is substituted into m serving as a reference counter.

In step S704, the optical transfer characteristics calculating unit is called and $z_m$, $H_{am}$, and $H_{bm}$ corresponding to the reference counter m are obtained.

The operation of the optical transfer characteristics calculating unit is started from step S1101 in FIG. 10.

In step S1102, the optical transfer characteristics calculating unit obtains $z_m$, $H_{am}$, and $H_{bm}$ corresponding to the reference counter m from the optical transfer characteristics - estimated distance table mentioned above. Then, the processing routine is returned in step S1103.

Subsequently, the following equation (13) is arithmetically operated in step S705, thereby obtaining an error evaluation value $e_m$.

$$ e_m = I_1 \times H_{b\ m} \cdot I_2 \times H_{a\ m} \qquad \cdots (13) $$

$z_m$ which minimizes the error evaluation value $e_m$ becomes the estimated distance z'.

The equation (13) is used to evaluate the equation (9) by the error evaluation value $e_m$.

As for the error evaluation value $e_m$, since it is necessary to evaluate in all cases of the reference counter m, the reference counter is increased in step S706 and, thereafter, processes in step S704 and subsequent steps are repetitively arithmetically operated.

After completion of the arithmetic operations with respect to all of the reference counters m, m which minimizes the error evaluation value $e_m$ is obtained in step S707.

Subsequently, the estimated distance z corresponding to m which minimizes the error evaluation value $e_m$ is decided in step S708.

The above relations are illustrated in a graph in FIG. 11 showing the relation between the estimated distance and the error evaluation value. According to the values shown in FIG. 11 as an example, the error evaluation value $e_m$ is minimum in a state of z4 (m = 4). Therefore, the distance shown by z4 may be set to the estimated distance z'.

However, according to the optical transfer characteristics - estimated distance table illustrated in FIG. 8, the estimated distance $z_m$ is obtained as a discrete value.

Therefore, as shown by a graph 901 in FIG. 11, the distance of higher precision may be obtained by a method whereby a minimum value $e_m$' is calculated by using a least square approximation or the like and the estimated distance z' corresponding thereto is obtained.

As mentioned above, the distance to the object at the window size (wx, wy) is arithmetically operated. In step S709, the calculated estimated distance z' is set to a pixel value (distance value) of the coordinates (x, y) of the distance image.

In step S710, a processing loop is executed so that the processes in steps S702 to S709 are executed to all pixels on the image.

Although the arithmetic operation is executed while sequentially increasing the error evaluation value $e_m$ and the minimum value is obtained in the embodiment, the minimum value of the error evaluation value $e_m$ can be also obtained at a high speed by using a dichotomizing searching method or the like.

Although the error evaluation value $e_m$ is arithmetically operated in the frequency region by the equation 13, it can be also arithmetically operated in a space region by using the following equation.

$$ e_m = i_1 \otimes h_{b\ m} \cdot i_2 \otimes h_{a\ m} $$

where, it is assumed that $i_1$, $h_{bm}$, $i_2$, and $h_{am}$ denote the observation image 1, the point spread function of the observation image 2, the observation image 2, and the point spread function of the observation image 1, respectively.

By executing the arithmetic operation process as mentioned above, the distance image can be obtained.

Subsequently, an algorithm for calculating the in-focus image in the embodiment will be described.

The in-focus image can be calculated by the equations (5).

By modifying the equations (5), the following equation (15) is derived.

$$S = \frac{1}{2}\left(\frac{IM_1}{H_a} + \frac{IM_2}{H_b}\right) \qquad \cdots(15)$$

However, actually, in the equation (15), there is a case where it has a value of zero or a value near zero in the optical transfer characteristics $H_a$ and $H_b$ and there is a possibility that a division is not correctly executed.

Therefore, now assuming that a Fourier transformation of an estimated in-focus image is set to S', an estimated in-focus image S' can be obtained by using the following equation (16).

$$S' = \sum_{m=1}^{2} W_m \cdot \left(\frac{IM_m}{H_m}\right) \qquad \cdots(16)$$

It is assumed that $H_1 = H_a$ and $H_2 = H_b$.

$W_m$ in the equation (16) denotes a weighting coefficient showing which one of spectra of the observation images $IM_1$ and $IM_2$ is higher at a certain space frequency.

$$W_m \propto \left| H_m \right| \qquad \cdots(17)$$

By setting a value of $W_m$ so as to satisfy the above expression (17), even if a zero point exists in a space frequency response, the in-focus image can be accurately reconstructed.

Although the case where there are two opening patterns and the case where the observation images are two display screens are shown in the embodiment, even if there are two or more opening patterns, the arithmetic operations can be also similarly executed.

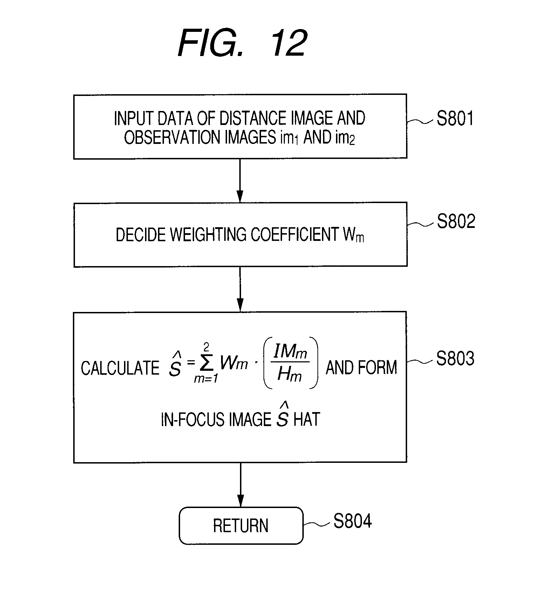

Subsequently, FIG. 12 illustrates a flowchart regarding the calculation of the in-focus image in the embodiment.

The operation of the blur reconstructing unit 207 is started from step S801.

In step S802, the weighting coefficient $W_m$ is decided by using the method shown in the above expression (17).

The estimated in-focus image S' can be obtained by arithmetically operating the equation (16) in step S803.

Since the estimated in-focus image S' expresses space frequency characteristics, an estimated in-focus image s' is derived by performing an inverse Fourier transformation.

The in-focus image is obtained as mentioned above.

Since the well-known algorithm can be used with respect to the formation of the re-focus image which is obtained from the distance image and the in-focus image and is used in the re-focus image arithmetic operating unit 208, its description is omitted here.

An image photographing apparatus and its method of the second embodiment according to the invention will be described in detail.

In the second embodiment, frequency characteristics of the optical transfer characteristics of the opening masks 103 and 104 in FIG. 3 are determined and opening mask patterns which meet the conditions are obtained, thereby reducing an arithmetic operation amount and reducing an amount of memory capacity which is used.

In the second embodiment, the frequency characteristics of the opening masks 103 and 104 satisfy the relations shown by the following equations (18).

$$\begin{cases} H_a = H_1 \cdot H_2 \\ H_b = H_2 \end{cases} \qquad \cdots(18)$$

where, $H_a$, $H_b$, $H_1$, and $H_2$ denote frequency characteristics of the optical transfer characteristics $h_a$, $h_b$, $h_1$, and $h_2$, respectively.

Assuming that the photographing states of the observation images are expressed by the equations (4), the equation (9) for calculating the distance to the object is modified to the following equation (19).

$$z' = \arg \min_{z} \left\| IM_1 - IM_2 \cdot H_1 \big|_z \right\|_2 \qquad \cdots(19)$$

At this time, a table showing a relation between $H_1$ and the distance to the object can be expressed by the following expression (20).

$$H_1 \big|_{z=z_1} \quad , \quad H_1 \big|_{z=z_2} \quad , \quad \cdots \qquad \cdots(20)$$

By obtaining z in which a value expressed by the following expression (21)

$$\left\| IM_1 - IM_2 \cdot H_1 \big|_z \right\|_2 \qquad \cdots(21)$$

becomes minimum by using the table shown by the table of the expression (20), the estimated distance z' which satisfies the equation (19) is derived.
The second embodiment differs from the first embodiment with respect to a point that the arithmetic operation for evaluating the estimated distance z' is executed by executing a convolution arithmetic operation (multiplication in the frequency region) in the equation (19) only once.
The convolution arithmetic operation is an arithmetic operation which takes a long time for processes.
Therefore, an amount of arithmetic operation of the equation (19) in the second embodiment is equal to almost the half of an amount of arithmetic operation of the equation (9) in the first embodiment.
A difference between the expressions (10) as a table showing the optical characteristics in the first embodiment and the expression (20) in the second embodiment is that in the case of second embodiment, since the table is constructed by one kind of optical transfer characteristics and the distance value, its data amount is equal to almost the half of that in the first embodiment.
It is now assumed that the opening masks 103 and 104 which satisfy the equations (18) satisfy the characteristics by using the opening patterns of the apertures.
It is also possible to construct in such a manner that the two apertures showing the optical characteristics of $H_1$ and $H_2$ are prepared, upon photographing of the one observation image ($im_1$), it is photographed through the opening masks of $H_1$ and $H_2$, and the other observation image ($im_2$) is photographed only through the opening mask of $H_2$.
As mentioned above, since the frequency characteristics of the opening masks 103 and 104 satisfy the equations (18), each of the amount of arithmetic operation for calculating the distance and the capacity of the data table showing the optical transfer characteristics is equal to almost the half of that in the first embodiment. The arithmetic operations can be more efficiently executed.

(Other embodiments)

Aspects of the present invention can also be realized by a computer of a system or apparatus (or devices such as a CPU or MPU) that reads out and executes a program recorded on a memory device to perform the functions of the above-described embodiments, and by a method, the steps of which are performed by a computer of a system or apparatus by, for example, reading out and executing a program recorded on a memory device to perform the functions of the above-described embodiments. For this purpose, the program is provided to the computer for example via a network or from a recording medium of various types serving as the memory device (e.g., computer-readable medium).
While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.
This application claims the benefit of Japanese Patent Application No. 2008-205882, filed August 8, 2008, which is hereby incorporated by reference herein in its entirety.

**Claims**

1. An image photographing apparatus comprising:

   observation image photographing means for obtaining a plurality of observation images by photographing a same object by a plurality of aperture patterns;
   optical transfer characteristics calculation means for calculating optical transfer characteristics according to a distance to the object; and
   distance arithmetic operating means for calculating the distance to the object from the plurality of observation images and the optical transfer characteristics.

2. An image photographing apparatus comprising:

   observation image photographing means for obtaining a plurality of observation images by photographing a same object by a plurality of aperture patterns;
   optical transfer characteristics calculating means for calculating first optical transfer characteristics according to a distance to the object;
   optical transfer characteristics arithmetic operating means for calculating second optical transfer characteristics from the plurality of observation images and the optical transfer characteristics so as to minimize a blur amount; and
   blur reconstructing means for obtaining an in-focus image by reconstructing a blur of an image by using the second optical transfer characteristics.

3. An apparatus according to claim 1 or 2, wherein the optical transfer characteristics are calculated by using an optical transfer characteristics table showing a relation between optical transfer characteristics at each position on a photosensing surface of an image pickup device and the distance.

4. An apparatus according to claim 1 or 2, wherein the optical transfer characteristics are calculated by using an optical transfer characteristics function showing a relation between optical transfer characteristics at each position on a photosensing surface of an image pickup device and the distance.

5. An apparatus according to claim 1, wherein, when it is assumed that the observation image by one of the plurality of aperture patterns is a first observation image and the observation image by another one of the plurality of aperture patterns is a second observation image, the distance arithmetic operating unit calculates the distance so that (the first observation image) $\otimes$ (a point spread function of the second observation image) - (the second observation image) $\otimes$ (a point spread function of the first observation image) | or |(frequency characteristics of the first observation image) x (optical transfer characteristics of the second observation image) - (frequency characteristics of the second observation image) x (optical transfer characteristics of the first observation image) | becomes minimum, where $\otimes$ indicates a convolution operator.

6. An apparatus according to claim 2, wherein, when it is assumed that the observation image by one of the plurality of aperture patterns is a first observation image and the observation image by another one of the plurality of aperture patterns is a second observation image, the optical transfer characteristics arithmetic operating unit calculates the second optical transfer characteristics so that |the first observation image) $\otimes$ (a point spread function of the second observation image) - (the second observation image) $\otimes$ (a point spread function of the first observation image) | or |(frequency characteristics of the first observation image) x (optical transfer characteristics of the second observation image) - (frequency characteristics of the second observation image) x (optical transfer characteristics of the first observation image) | becomes minimum, where $\otimes$ indicates a convolution operator.

7. An apparatus according to claim 1 or 2, wherein the plurality of observation images are time-divisionally obtained.

8. An apparatus according to claim 1 or 2, wherein the plurality of observation images are obtained by dividing a light beam.

9. A distance arithmetic operating method of an image photographing apparatus, comprising the steps of:

   obtaining a plurality of observation images by photographing a same object by a plurality of aperture patterns;
   calculating optical transfer characteristics according to a distance to the object; and

calculating the distance to the object from the plurality of observation images and the optical transfer characteristics.

**10.** An in-focus image obtaining method of an image photographing apparatus, comprising the steps of:

obtaining a plurality of observation images by photographing a same object by a plurality of aperture patterns;
calculating optical transfer characteristics according to a distance to the object;
calculating optical transfer characteristics from the plurality of observation images and the optical transfer characteristics so as to minimize a blur amount; and
obtaining an in-focus image by reconstructing a blur of an image by using the optical transfer characteristics which minimize the blur amount.

## FIG. 1

OBSERVATION IMAGE PHOTOGRAPHING UNIT

209      211

LIGHT    LIGHT    MODULATED LIGHT

OPTICAL LENS 1 → LIGHT PASSING UNIT → OPTICAL LENS 2 → PHOTOELECTRIC CONVERTING UNIT

201     202     219     203

221

206

OBSERVATION IMAGES $im_1$ AND $im_2$ ~212

OPTICAL TRANSFER CHARACTERISTICS CALCULATING UNIT → DISTANCE/OPTIMUM OPTICAL TRANSFER CHARACTERISTICS ARITHMETIC OPERATING UNIT → DISTANCE IMAGE ~213

222

DISTANCE IMAGE AND OBSERVATION IMAGES $im_1$ AND $im_2$ ~217

207

BLUR RECONSTRUCTING UNIT → IN-FOCUS IMAGE ~214

DISTANCE IMAGE

216

IN-FOCUS IMAGE ~218

RE-FOCUS IMAGE ARITHMETIC OPERATING UNIT → RE-FOCUS IMAGE

208     ~215

16

# FIG. 2

FIG. 3

## FIG. 4A

OBSERVATION IMAGE im₁
1001

## FIG. 4B

OBSERVATION IMAGE im₂
1002

## FIG. 4C

DISTANCE IMAGE
1003

## FIG. 4D

IN-FOCUS IMAGE
1004

# FIG. 5

302

303

301

TOP VIEW

REAR VIEW

FRONT VIEW

SIDE VIEW

EP 2 314 988 A1

FIG. 6

EP 2 314 988 A1

FIG. 7

# FIG. 8

OPTICAL TRANSFER CHARACTERISTICS –
ESTIMATED DISTANCE TABLE

| OBJECT DISTANCE $Z_m$ [m] | OPTICAL TRANSFER CHARACTERISTICS $Z_{am}$ [2-DIMENSIONAL MATRIX] | OPTICAL TRANSFER CHARACTERISTICS $H_{bm}$ [2-DIMENSIONAL MATRIX] |
|---|---|---|
| 1.00 | MATRIX $H_{a1}$ | MATRIX $H_{b1}$ |
| 1.05 | MATRIX $H_{a2}$ | MATRIX $H_{b2}$ |
| . . . | . . . | . . . |
| 6.00 | MATRIX $H_{a100}$ | MATRIX $H_{b100}$ |

601 602 603

# FIG. 9

OBSERVATION IMAGES $im_1$ AND $im_2$ ARE INPUT TO DISTANCE ARITHMETIC OPERATING UNIT ──S701

↓

CUT OUT WHOLE IMAGE BY WINDOW WIDTH, SET CENTER OF CUT-OUT COORDINATES INTO x, y, AND SET CUT-OUT IMAGES INTO $i_1$ AND $i_2$ ──S702

↓

CONVERT $i_1$ AND $i_2$ INTO FREQUENCY BANDS, CALCULATE $I_1$ AND $I_2$, AND $M \leftarrow 0$ ──S703

↓

CALL OPTICAL TRANSFER CHARACTERISTICS CALCULATING UNIT AND OBTAIN $H_{am}$ AND $H_{bm}$ ──S704

↓

CALCULATE ERROR EVALUATION VALUE $e_m = I_1 \times H_{bm} - I_2 \times H_{am}$ ──S705

↓

REPEAT PROCESSES UNTIL ALL $e_m$ ARE CALCULATED $(m \leftarrow m+1)$ ──S706

↓

DECIDE m AT THE TIME OF MINIMUM ERROR EVALUATION VALUE $e_m$ ──S707

↓

SET $Z_m$ AT THE TIME OF m INTO ESTIMATED DISTANCE Z ──S708

↓

SET ESTIMATED Z INTO DISTANCE VALUE OF x ,y AND OBTAIN PIXEL OF DISTANCE IMAGE (x, y) ──S709

↓

MOVE WINDOW COORDINATES x, y TO ALL PIXELS AND REPEAT PROCESSES ──S710

↓

RETURN ──S711

## FIG. 10

START CALCULATION OF OPTICAL TRANSFER CHARACTERISTICS — S1101

↓

OBTAIN $H_{am}$ AND $H_{bm}$ WITH REFERENCE TO OPTICAL TRANSFER CHARACTERISTICS – ESTIMATED DISTANCE TABLE — S1102

↓

RETURN — S1103

## FIG. 11

ERROR EVALUATION VALUE $e_m$ = $I_1 \times H_{bm} - I_2 \times H_{am}$

901

$^A e_m$

0   $Z_0$   $Z_1$   $Z_2$   $Z_3$   $Z_4$   $^A Z$   $Z_5$   $Z_6$   $Z_7$

DISTANCE Z

# FIG. 12

INPUT DATA OF DISTANCE IMAGE AND OBSERVATION IMAGES $im_1$ AND $im_2$ — S801

DECIDE WEIGHTING COEFFICIENT $W_m$ — S802

CALCULATE $\hat{S} = \sum_{m=1}^{2} W_m \cdot \left( \dfrac{IM_m}{H_m} \right)$ AND FORM IN-FOCUS IMAGE $\hat{S}$ HAT — S803

RETURN — S804

## FIG. 13A

1201

APERTURE POSITION
(TELECENTRICITY)

MULTI-FOCUS

CODED APERTURE

APERTURE    LENSES

1203

1205
1206
IMAGER

1204

1207

## FIG. 13B

1202

1208

1209

1210

## INTERNATIONAL SEARCH REPORT

| International application No. |
| --- |
| PCT/JP2009/064329 |

A. CLASSIFICATION OF SUBJECT MATTER
*G01C3/06*(2006.01)i, *G02B7/28*(2006.01)i, *G03B13/36*(2006.01)i, *H04N5/232*(2006.01)i

According to International Patent Classification (IPC) or to both national classification and IPC

B. FIELDS SEARCHED

Minimum documentation searched (classification system followed by classification symbols)
G01C3/00-3/32, G02B7/28, G03B13/36, H04N5/232

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2001-124984 A (Canon Inc.), 11 May 2001 (11.05.2001), entire text; fig. 1 to 32 & US 6933978 B1 | 1-10 |
| A | JP 11-337313 A (President of The Kyoto University), 10 December 1999 (10.12.1999), entire text; fig. 1 to 14 (Family: none) | 1-10 |
| A | JP 5-332725 A (Hitachi, Ltd.), 14 December 1993 (14.12.1993), entire text; fig. 1 to 5 (Family: none) | 1-10 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 02 November, 2009 (02.11.09) | 10 November, 2009 (10.11.09) |

| Name and mailing address of the ISA/ | Authorized officer |
| --- | --- |
| Japanese Patent Office | |
| Facsimile No. | Telephone No. |

Form PCT/ISA/210 (second sheet) (April 2007)

**INTERNATIONAL SEARCH REPORT**

| International application No. |
| --- |
| PCT/JP2009/064329 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 53-74062 A  (Suteo TSUTSUMI),<br>01 July 1978 (01.07.1978),<br>entire text; fig. 1 to 3<br>(Family: none) | 1-10 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 02963990 B

- JP 2008205882 A

**Non-patent literature cited in the description**

- **Rob Fergus ; Fr'edo Durand ; William T.** Computer Science and Artificial Intelligence Laboratory/SIGGRAPH2007. Freeman/Massachusetts Institute of Technology, 2007